# FASCICULE DE BREVET EUROPEEN

(11) **EP 1 208 916 B1**
(45) Date de publication et mention de la délivrance du brevet: **09.06.2004**
(21) Numéro de dépôt: 01402855.9
(22) Date de dépôt: 06.11.2001
(51) Int. Cl.: B05B 11/00, G01F 11/02, G01F 11/26

(54) **Dispositif amélioré pour le conditionnement et la distribution dosée d'un produit liquide**
Verbesserte Vorrichtung zur Verpackung und der dosierten Abgabe von Flüssigkeit
Device for the packaging and the dosed dispensing of a liquid

(30) Priorité: 24.11.2000 FR 0015222
(43) Date de publication de la demande: 29.05.2002
(73) Titulaire: L'OREAL, 75008 Paris (FR)
(72) Inventeur: De Laforcade, Vincent, 78120 Rambouillet (FR)
(74) Mandataire: Leray, Noelle

(56) Documents cités:
- FR-A- 2 393 279
- GB-A- 2 236 094
- US-A- 1 896 405
- US-A- 5 476 198

## Description

La présente invention concerne un dispositif pour le conditionnement et la distribution dosée d'un produit, notamment cosmétique ou de soin, tel que pouvant être utilisé par exemple pour le maquillage, le soin ou l'hygiène de la peau ou du cheveu. Une telle distribution dosée peut être recherchée, notamment pour des produits tels qu'utilisés par exemple pour le soin ou la repousse des cheveux.

Le dispositif visé par la présente invention est du type comprenant un organe de rétention délimitant une cavité doseuse, à remplir notamment par retournement total ou partiel du dispositif, la distribution du produit au moyen de la pompe se faisant en position tête en haut du dispositif. Le dispositif est par exemple équipé d'une pompe assurant la distribution du produit contenu dans la cavité doseuse, la distribution se faisant dans une position où la pompe est située au dessus de la surface libre du liquide dans le récipient contenant le produit à distribuer.

Du brevet EP 0 626 321, qui décrit un ensemble présentant les caractéristiques du préamble de la revendication 1, il est connu un ensemble équipé d'une pompe alimentée sans tube plongeur depuis un organe de rétention comportant un fond et une paroi latérale, de diamètre extérieur inférieur au diamètre intérieur du col du récipient. L'organe de rétention comporte en outre autour de l'extrémité supérieure de sa paroi latérale des pattes souples s'évasant vers le col du récipient selon une direction faisant un angle avec la verticale, pour assurer le remplissage de l'organe de rétention.

Dans la pratique, il s'avère qu'un tel dispositif ne permet pas d'assurer un bon remplissage de l'organe de rétention, et notamment lorsque l'on arrive en fin d'utilisation du contenu du dispositif. En effet, on observe une variation importante du degré de remplissage de l'organe de rétention, en fonction de la façon dont on déplace le récipient, depuis sa position retournée de façon totale ou, partielle, vers sa position de distribution, c'est à dire tête en haut.

Aussi, est-ce un des objets de l'invention que de fournir un ensemble pour le conditionnement et la distribution dosée d'un produit liquide, et remédiant en tout ou partie aux inconvénients des dispositifs décrits ci-dessus.

C'est en particulier un objet de l'invention que de fournir un dispositif du type précité, et qui autorise une meilleure reproductibilité du niveau de remplissage de la cavité doseuse, et ce, jusqu'à sensiblement la dernière utilisation du dispositif.

C'est un autre objet de l'invention que de fournir un dispositif du type précité dont le degré de remplissage de la cavité doseuse est indépendant de la gestuelle mise en oeuvre pour provoquer le remplissage de ladite cavité doseuse.

C'est encore un autre objet de l'invention que de fournir un tel dispositif qui soit simple et fiable d'utilisation et qui soit économique à réaliser.

D'autres objets encore apparaîtront dans la description détaillée qui suit.

Selon l'invention, ces objets sont atteints en réalisant un dispositif pour le conditionnement et la distribution dosée d'un produit liquide comprenant un récipient comportant une ouverture dans laquelle est monté un élément de rétention délimitant une cavité doseuse dont le contenu est destiné à être distribué en position tête en haut du dispositif, ledit élément de rétention comprenant au moins un premier passage dont la position délimite le volume maximal de la cavité doseuse, l'élément de rétention comportant un élément séparant une première zone du récipient dans laquelle séjourne le produit en position tête en haut du dispositif, d'une seconde zone adjacente à ladite ouverture, ledit élément de séparation étant apte à délimiter au moins en partie au moins un deuxième passage entre les première et seconde zones, le(s)dit(s) deuxième(s) passage(s) étant configuré(s) de manière à permettre un écoulement unidirectionnel du produit vers la seconde zone en réponse à un retournement au moins partiel du dispositif, ledit élément de séparation assurant en outre l'acheminement de tout ou partie du produit situé dans la seconde zone vers la cavité doseuse via au moins un troisième passage formé par ledit élément de rétention.

Le (ou les) deuxième(s) passage(s) est(sont) configuré(s) de manière à permettre un écoulement unidirectionnel du produit en direction de la cavité doseuse en réponse à un retournement du dispositif. Selon la présente invention, on entend par « écoulement unidirectionnel », un écoulement dont le débit est plus important lors du retournement du dispositif en position tête en bas que lors du retour en position tête en haut. En d'autres termes, la section du (ou des) deuxième(s) passage(s) est plus grande en position tête en bas du dispositif qu'en position tête en haut.

Avantageusement, on prévoit que le(s) deuxième(s) passage(s) s'ouvre(nt) sous la pression du produit lors du retournement du dispositif et qu'il(s) se referme(nt) de manière pratiquement étanche lors du retour en position tête en haut. En d'autres termes, l'élément de rétention et en particulier l'élément de séparation délimitant en partie le(s) deuxième(s) passage(s), ne permet pas le retour du produit écoulé dans la seconde zone lors du retournement du dispositif au travers du(des) deuxième(s) passage(s), et ce, quelle que soit la gestuelle de retournement du dispositif, et en particulier, la vitesse d'exécution du mouvement de retournement. Cette caractéristique se distingue de la configuration du brevet mentionné précédemment dans lequel une partie non négligeable du produit se trouvant sur les pattes souples retombe dans le récipient en passant entre elles.

Selon un mode de réalisation préférentiel, l'élément de séparation est constitué d'une membrane élastiquement déformable dont un bord périphérique s'étend jusqu'au voisinage d'une paroi intérieure du récipient. Une portion de la membrane est apte à venir en contact avec la paroi intérieure du récipient en position tête en haut du dispositif et à s'écarter de ladite paroi sous la pression du produit en réponse au retournement partiel.

Avantageusement, la portion de la membrane apte à venir en contact avec la paroi intérieure du récipient est une portion annulaire distante du bord périphérique de ladite membrane, ladite portion se situe par exemple à une distance du bord périphérique comprise entre 0,5 et 3 mm. Une telle configuration permet d'obtenir une étanchéité en position tête en haut du dispositif, quelles que soient les tolérances utilisées lors de sa fabrication.

La membrane est de façon avantageuse réalisée, au moins par partie, en un matériau élastiquement déformable, choisi notamment parmi les élastomères thermoplastiques ou réticulés. Ainsi, la portion de la membrane s'appliquant contre la paroi intérieure du récipient en position tête en haut, peut facilement s'écarter de la paroi sous la pression du produit et facilement revenir s'appliquer contre la paroi lors du retour en position tête en haut.

De préférence, le matériau de la membrane est choisi parmi les Silicones, les Latex naturels ou synthétiques, les EPDM, les Polyuréthanes, les mélanges de Polypropylène et de SBS, SEBS, ou EPDM, les Polyéthylènes de très basse densité, les mélanges à base de polyesters glycols (TPU) ou de Polyéther glycols (PEBA et COPE), les Chlorures de polyvinyle souples (PVC). Alternativement, on utilise des matériaux non élastomériques tels que du PEBD.

Avantageusement, la membrane présente une épaisseur décroissante en direction de la paroi intérieure du récipient. Cette configuration permet notamment de faciliter le montage de la membrane dans le récipient et aussi de faciliter l'ouverture et la fermeture du deuxième passage.

Avantageusement encore, l'élément de séparation est incliné en direction de la cavité doseuse. De préférence, ledit élément de séparation forme avec un axe longitudinal du dispositif, un angle compris entre 60 et 89°. Cette caractéristique permet de favoriser l'acheminement de tout ou partie du produit situé dans la seconde zone vers la cavité doseuse.

Selon un mode de réalisation particulier, la paroi interne du récipient forme un épaulement sur lequel vient en contact la portion de la membrane lorsque le dispositif est en position tête en haut. L'épaulement permet notamment de retenir facilement la membrane à une hauteur souhaitée dans le récipient. Il permet également d'assurer une certaine étanchéité entre la membrane et la paroi intérieure du récipient sans qu'il soit nécessaire d'utiliser une membrane dont le bord périphérique s'applique avec trop de frottement sur la paroi intérieure pour assurer son maintien ce qui l'empêcherait de s'écarter facilement lors du retournement du dispositif en position tête en bas.

L'élément de rétention et l'élément de séparation sont avantageusement obtenus par moulage en une seule pièce ce qui permet notamment de la fabriquer à faible coût et de faciliter son montage dans le récipient.

Selon un mode de réalisation particulier, l'élément de rétention est constitué d'un élément tubulaire dont un fond est fermé et correspond au fond de la cavité doseuse, et dont une extrémité ouverte est montée sur un bord du récipient délimitant son ouverture.

Selon un mode de réalisation préférentiel, le dispositif comprend en outre une pompe prévue pour distribuer le produit. La pompe est solidaire d'un tube plongeur dont une extrémité est située sensiblement au voisinage du fond de la cavité doseuse. La présence du tube plongeur autorise la réalisation d'une cavité doseuse de plus grand volume.

L'élément de rétention s'étend de préférence sur une partie de sa hauteur à l'intérieur d'un col formé par le récipient, et dont un bord libre délimite l'ouverture du récipient.

La pompe est de préférence, solidaire d'une frette, montée fixement sur le col du récipient, notamment par encliquetage ou par vissage. Elle peut être surmontée d'un organe, notamment sous forme d'un bouton poussoir, pour actionner ladite pompe.

Le dispositif selon l'invention est particulièrement adapté pour le conditionnement et la distribution d'un produit cosmétique ou de soin, notamment pour la peau ou les cheveux, par exemple un soin nutritif des racines, ou un soin cuir chevelu.

L'invention consiste, mis à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- la figure 1A représente une vue en coupe d'un dispositif selon un mode de réalisation de l'invention ;
- la figure 1B représente un zoom de la zone entourée en pointillée à la figure 1A ;
- la figure 2 représente une vue en coupe d'un élément du dispositif de la figure 1A ;
- les figures 3A-3C illustrent différentes étapes du montage de l'élément représenté à la figure 2 dans le dispositif représenté à la figure 1A ; et
- les figures 4A-4C illustrent différentes étapes du fonctionnement du dispositif représenté à la figure 1A.

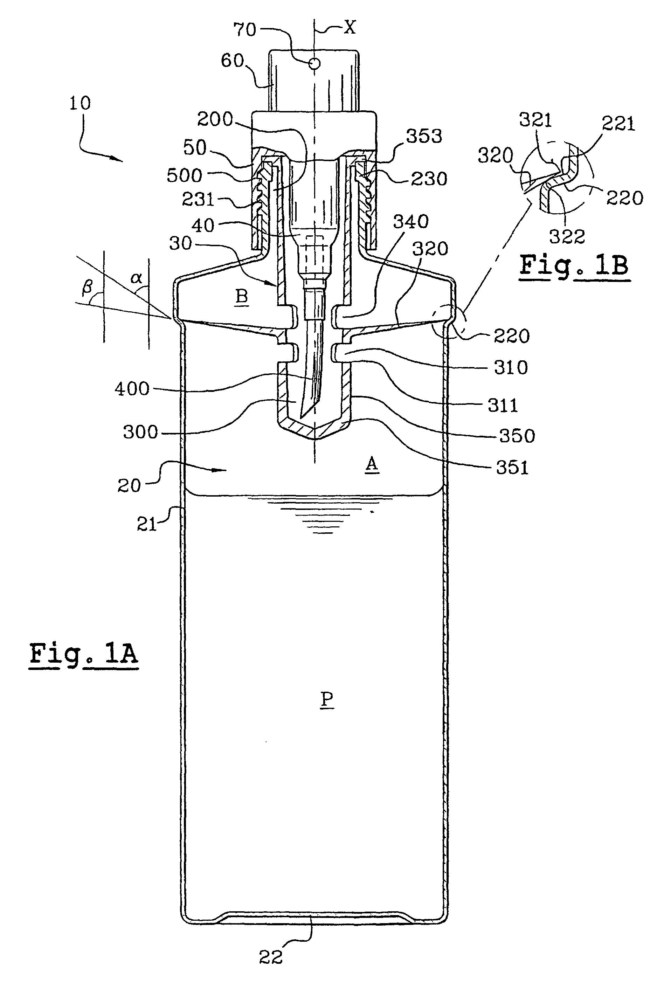

Le dispositif 10 représenté à la figure 1A comprend un récipient 20 prévu pour recevoir du produit P et présentant un corps 21 dont une extrémité est fermée par un fond 22. Une extrémité opposée au fond présente un col 230 dont un bord libre délimite une ouverture 200 à l'intérieur de laquelle est monté un élément de rétention 30. La surface extérieure du col 230 comprend un filetage 231, apte à coopérer avec un filetage 500 prévu sur la surface intérieure d'une frette de montage 50. L'élément de rétention délimite une cavité doseuse 300 dont le contenu est destiné à être distribué en position tête en haut du dispositif, par tout moyen connu de l'homme du métier permettant une distribution tête en haut.

De préférence, une pompe 40 est prévue pour distribuer le produit. La pompe 40 est alimentée depuis l'élément de rétention 30 qui sera décrit en détail ultérieurement. La pompe est fixée au récipient 20, via la frette de montage 50. Un organe d'actionnement sous forme d'un bouton poussoir 60 permet l'actionnement de la pompe et la sortie du produit au travers d'au moins un orifice de sortie 70. Les éléments constitutifs du dispositif, notamment le récipient 20, l'élément de rétention 30, la pompe 40, la frette 50, et le bouton poussoir 60, peuvent être obtenus de moulage d'un matériau thermoplastique, notamment un polypropylène ou un polyéthylène.

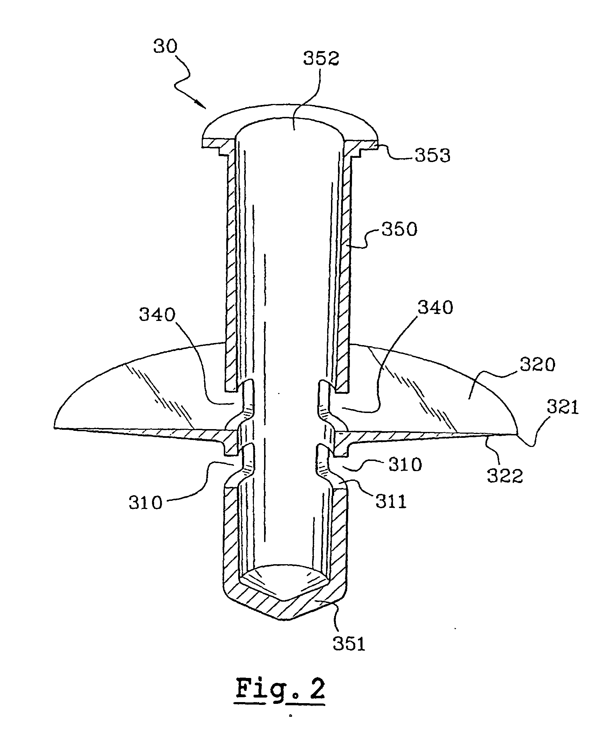

L'élément de rétention 30 représenté de façon isolée à la figure 2 et placé à l'intérieur du dispositif 10 à la figure 1A, se présente sous forme d'un élément tubulaire 350, de diamètre extérieur légèrement inférieur au diamètre intérieur du col 230 du récipient 20. Une extrémité de l'élément de rétention 30 est fermée par un fond 351 formant ainsi le fond de la cavité doseuse. L'autre extrémité 352 est ouverte et présente un rebord 353 prenant appui sur le bord libre du col 230 du récipient 20.

L'élément de rétention comprend deux fenêtres 310 diamétralement opposées. Les fenêtres 310 sont de forme oblongue, et sont orientées longitudinalement à un axe X du dispositif 10. Le bord inférieur 311 des fenêtres 310 délimite la hauteur de remplissage maximal de la cavité doseuse 300 formée en dessous desdites fenêtres 310. Typiquement, le volume de la cavité doseuse est de l'ordre de quelques millilitres.

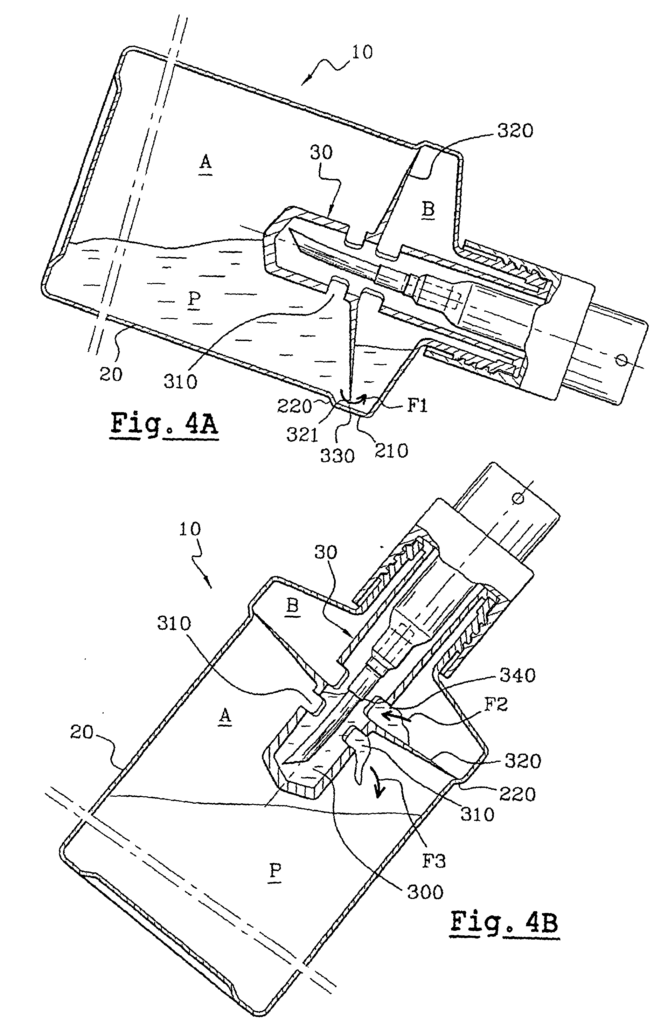

L'élément de rétention comprend également une membrane 320 laquelle, comme on le voit à la figure 1A, sépare une première zone A du récipient dans laquelle séjourne le produit P lorsque le dispositif est en position tête en haut, d'une seconde zone B adjacente à l'ouverture 200 du récipient. La membrane 320 est apte à délimiter en combinaison avec la paroi intérieure 210 du récipient un passage annulaire 330, représenté uniquement à la figure 4A, entre les premières et secondes zones. La membrane 320 est configurée de manière à permettre un écoulement unidirectionnel du produit vers la seconde zone en réponse à un retournement au moins partiel du dispositif, au travers du passage annulaire 330.

Enfin, du côté de la membrane 320 opposé aux fenêtres 310, l'élément de rétention 30 comprend deux fenêtres 340 diamétralement opposées, et décalées à 90° par rapport aux fenêtres 310. Les fenêtres 340 sont de forme oblongue et sont orientées perpendiculairement à l'axe X du dispositif 10.

Les fenêtres 310 sont formées dans l'élément tubulaire dans la première zone A délimitée par la membrane 320 et les fenêtres 340 dans la seconde zone B.

Selon un mode préférentiel de l'invention, l'élément de séparation est constitué d'une membrane 320 élastiquement déformable. Un bord périphérique 321 de la membrane s'étend jusqu'au voisinage de la paroi intérieure 210 du récipient comme on le voit sur la figure 1B. La membrane comprend une portion annulaire 322 qui est apte à venir en contact, de préférence de manière sensiblement étanche, avec un épaulement, décrit ultérieurement, prévu dans la paroi intérieure 210 du récipient en position tête en haut du dispositif. Le terme sensiblement étanche traduit le fait que l'essentiel du produit entré dans la seconde zone ne peut s'écouler dans la première zone lors du retour en position tête en haut. Sous la pression du produit en réponse au retournement partiel du dispositif, la membrane s'écarte de la paroi de manière à délimiter, avec la paroi intérieure 210, le deuxième passage 330. (Fig. 4A)

La membrane est réalisée en matériau élastiquement déformable choisi parmi, par exemple, les élastomères thermoplastiques ou réticulés. A titre d'exemple, on peut citer notamment, les Silicones, les Latex naturels ou synthétiques, les EPDM, les Polyuréthanes, les mélanges de Polypropylène et de SBS, SEBS, ou EPDM, les Polyéthylènes de très basse densité, les mélanges à base de polyesters glycols (TPU) ou de Polyéther glycols (PEBA et COPE), les Chlorures de polyvinyle souples (PVC). De préférence, un tel matériau a une dureté comprise entre 20 Shore A et 40 Shore D, de préférence, entre 40 Shore A et 75 Shore A. Son élasticité peut aller de 0,5 à 5 MPa, et de préférence, de 0,8 à 2 MPa (contrainte de traction à 100 % d'allongement). On choisit par exemple un élastomère de Silicone.

Avantageusement, la membrane 320 est inclinée en direction de la cavité doseuse. Elle forme avec un axe longitudinal du dispositif, un angle β par exemple égal à environ 85°. Cette inclinaison contribue à acheminer le produit entré dans la seconde zone B vers la cavité doseuse.

Afin que pratiquement tout le produit entré dans la seconde zone B soit acheminé vers la cavité doseuse, on utilise préférentiellement une membrane formant une couronne continue, sans interruption.

La paroi intérieure 210 du récipient forme un épaulement 220 destiné à recevoir la portion 322 de la membrane lorsque le dispositif est en position tête en haut. De préférence, la surface interne supérieure 221 de l'épaulement présente un angle α avec l'axe longitudinal du récipient par exemple égal à environ 60° de manière à recevoir la portion 322 de la membrane et à la maintenir inclinée.

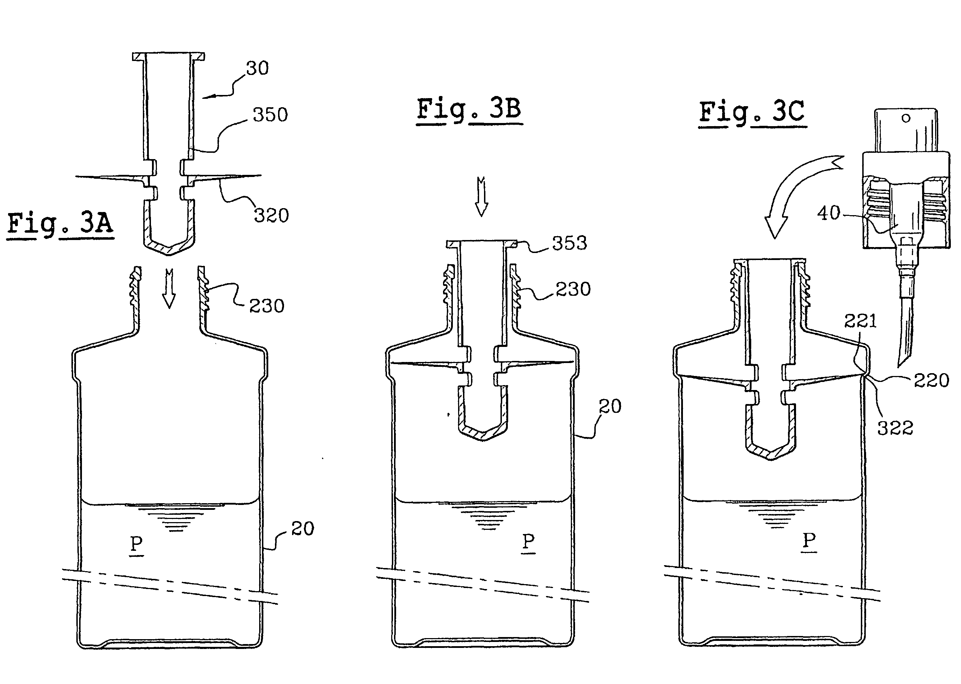

Pour faciliter le montage de l'élément de rétention dans le dispositif illustré à la figure 3, la membrane présente une épaisseur décroissante en direction de la paroi intérieure du récipient.

Selon un autre mode de réalisation de l'invention non représenté, la membrane est pourvue d'au moins un clapet qui est apte à s'ouvrir sous la pression du produit en réponse au retournement partiel du dispositif et à se refermer lors du retour du dispositif en position tête en haut.

Si on se réfère à la figure 3, on peut voir les différentes étapes de montage du dispositif.

L'élément de rétention 30 tel qu'il est représenté à la figure 3A est obtenu par moulage et formé d'une seule pièce. La membrane est moulée avec un angle de 90° avec l'élément tubulaire 350. Il est évident qu'elle peut être moulée avec un angle inférieur de manière à obtenir l'inclinaison en direction de la cavité doseuse.

Après remplissage du récipient par le produit P, l'élément de rétention 30 est entré dans le récipient 20 par le col 230 tel que représenté à la figure 3B, jusqu'au moment représenté à la figure 3C où le rebord 353 prend appui sur le col 230 du récipient 20. L'inclinaison de la membrane vers la cavité doseuse est obtenue par le fait que portion 322 de la membrane s'applique sur la surface interne supérieure 221 de l'épaulement 220 inclinée de 60°. La pompe 40 est alors positionnée à l'intérieur du récipient 20.

Les figures 4A-4C auxquelles il est maintenant fait référence, illustrent différentes étapes du fonctionnement du dispositif qui vient d'être décrit en référence aux figures 1A, 1B, 2 et 3A-3C.

A la figure 4A, le dispositif 10 est retourné tête en bas de sorte que le poids du produit P ainsi que la souplesse de la membrane autorise cette dernière à fléchir en direction de l'ouverture du récipient. Le deuxième passage 330 est ainsi délimité entre ledit bord périphérique 321 et la paroi intérieure 210 du récipient. Le produit P s'écoule ainsi de la zone A vers la zone B comme cela est matérialisé par la flèche F1. Si la quantité résiduelle de produit est suffisante, une partie du produit P peut également s'écouler au travers des fenêtres 310 à l'intérieur de l'élément de rétention 30. Une partie de la zone B est alors remplie de produit P. Cette zone B est dimensionnée de sorte que son volume est significativement plus grand que celui de la cavité doseuse.

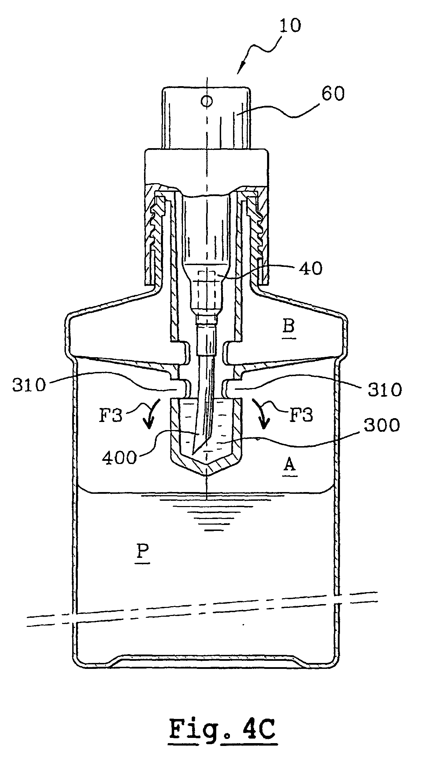

Lors du retournement du dispositif de la position tête en bas de la figure 4A vers la position tête en haut de la figure 4C, dont une position est représentée à la figure 4B, la membrane reprend sa position initiale sous l'effet combiné du poids du produit et de l'élasticité du matériau la formant. La membrane s'applique alors sur l'épaulement 220 de sorte que le deuxième passage 330 se referme. Le produit P présent dans la zone B du récipient s'écoule alors à l'intérieur de la cavité doseuse 300 via les fenêtres 340, comme cela est matérialisé par la flèche F2.

En continuant le mouvement de retournement, de manière à, comme représenté à la figure 4C, remettre le dispositif sensiblement en position tête en haut, le produit remplit la cavité doseuse 300. Tout produit en excès dans la cavité doseuse 300 retombe dans la zone A du récipient 20 par débordement via les fenêtres 310, comme cela est matérialisé par la flèche F3. La cavité doseuse est ainsi remplie toujours sensiblement de la même manière, et ce quelles que soient les conditions de retournement du récipient de la position tête en bas vers la position tête en haut.

Ensuite, il reste à distribuer le contenu de la cavité doseuse 300 au moyen de la pompe 40, laquelle est actionnée au moyen du bouton poussoir 60, le produit passant dans la pompe 40 via le tube plongeur 400 dont l'extrémité libre se trouve au fond de la cavité doseuse 300.

Dans la description détaillée qui précède, il a été fait référence à des modes de réalisation préférés de l'invention. Il est évident que des variantes peuvent y être apportées sans s'écarter de l'invention telle que revendiquée ci-après.

## Revendications

1. Dispositif (10) pour le conditionnement et la distribution dosée d'un produit liquide (P) comprenant un récipient (20) comportant une ouverture (200) dans laquelle est monté un élément de rétention (30) délimitant une cavité doseuse (300) dont le contenu est destiné à être distribué en position tête en haut du dispositif, ledit élément de rétention (30) comprenant au moins un premier passage (310) dont la position délimite le volume maximal de la cavité doseuse (300), **caractérisé en ce que** ledit élément de rétention comporte un élément (320) séparant une première zone A du récipient dans laquelle séjourne le produit en position tête en haut du dispositif, d'une seconde zone B adjacente à ladite ouverture, ledit élément de séparation (320) étant apte à délimiter au moins en partie au moins un deuxième passage (330) entre les première et seconde zones, ledit deuxième passage étant configuré de manière à permettre un écoulement unidirectionnel du produit vers la seconde zone en réponse à un retournement au moins partiel du dispositif, ledit élément de séparation (320) assurant en outre l'acheminement de tout ou partie du produit situé dans la seconde zone vers la cavité doseuse via au moins un troisième passage (340) formé par ledit élément de rétention.

2. Dispositif selon la revendication 1, **caractérisé en ce que** ledit élément de séparation (320) est constitué d'une membrane élastiquement déformable dont un bord périphérique (321) s'étend jusqu'au voisinage d'une paroi intérieure (210) du récipient, ladite membrane comportant une portion (322) apte à venir en contact avec la paroi intérieure du récipient en position tête en haut du dispositif, et à s'écarter de ladite paroi sous la pression du produit en réponse au retournement partiel.

3. Dispositif selon la revendication 2, **caractérisé en ce que** ladite portion (322) de la membrane apte à venir en contact avec la paroi intérieure du récipient est une portion annulaire distante du bord périphérique (321) de ladite membrane.

4. Dispositif selon l'une quelconque des revendications 2 ou 3, **caractérisé en ce que** ladite membrane est réalisée en un matériau élastiquement déformable, notamment un matériau choisi parmi les élastomères thermoplastiques ou réticulés.

5. Dispositif selon la revendication 4, **caractérisé en ce que** le matériau est choisi parmi les Silicones, les Latex naturels ou synthétiques, les EPDM, les Polyuréthanes, les mélanges de Polypropylène et de SBS, SEBS, ou EPDM, les Polyéthylènes de très basse densité, les mélanges à base de polyesters glycols (TPU) ou de Polyéther glycols (PEBA et COPE), les Chlorures de polyvinyle souples (PVC).

6. Dispositif selon l'une quelconque des revendications 2 à 5, **caractérisé en ce que** ladite membrane présente une épaisseur décroissante en direction de la paroi intérieure du récipient.

7. Dispositif selon l'une quelconque des revendications 2 à 6, **caractérisé en ce que** la paroi intérieure du récipient forme un épaulement (220) sur lequel vient en contact ladite portion (322) de la membrane lorsque le dispositif est en position tête en haut.

8. Dispositif selon l'une quelconque des revendications 1 à 7, **caractérisé en ce que** ledit élément de séparation (320) est incliné en direction de la cavité doseuse.

9. Dispositif selon la revendication 8, **caractérisé en ce que** ledit élément de séparation forme avec un axe longitudinal du dispositif un angle compris entre 60 et 89°.

10. Dispositif selon l'une quelconque des revendications précédentes, **caractérisé en ce que** ledit élément de rétention (30) et ledit élément de séparation (320) sont obtenus par moulage en une seule pièce.

11. Dispositif selon l'une quelconque des revendications précédentes, **caractérisé en ce que** l'élément de rétention (30) est constitué d'un élément tubulaire (350) dont un fond (351) est fermé et correspond au fond de la cavité doseuse, et dont une extrémité ouverte (352) est montée sur un bord du récipient délimitant ladite ouverture (200).

12. Dispositif selon la revendication 11, **caractérisé en ce qu'**il comprend en outre une pompe (40) prévue pour distribuer le produit (P), ladite pompe étant solidaire d'un tube plongeur (400) dont une extrémité est située sensiblement au voisinage du fond (351) de la cavité doseuse (300).

13. Dispositif selon l'une quelconque des revendications précédentes, **caractérisé en ce que** ledit élément de rétention (30) s'étend sur une partie de sa hauteur à l'intérieur d'un col (230) formé par le récipient (20), et dont un bord libre délimite ladite ouverture (200).

14. Dispositif selon la revendication 13, **caractérisé en ce que** la pompe (40) est solidaire d'une frette (50), montée fixement sur le col (230) du récipient, notamment par encliquetage ou par vissage.

15. Dispositif selon l'une quelconque des revendications 12 à 14, **caractérisé en ce que** ladite pompe (40) est surmontée d'un organe, notamment sous forme d'un bouton poussoir (60), pour actionner ladite pompe.

16. Utilisation d'un dispositif selon l'une quelconque des revendications qui précèdent pour le conditionnement et la distribution d'un produit cosmétique ou de soin (P), notamment pour la peau ou les cheveux.

## Patentansprüche

1. Vorrichtung (10) zur Verpackung und zur dosierten Ausgabe eines flüssigen Produkts (P), die einen Behälter (20) aufweist, der eine Öffnung (200) besitzt, in die ein Rückhalteelement (30) montiert ist, das einen Dosierhohlraum (300) begrenzt, dessen Inhalt in der aufrechten Stellung der Vorrichtung ausgegeben werden soll, wobei das Rückhalteelement (30) mindestens einen ersten Durchlass (310) aufweist, dessen Stellung das maximale Volumen des Dosierhohlraums (300) begrenzt, **dadurch gekennzeichnet, dass** das Rückhalteelement ein Element (320) aufweist, das eine erste Zone A des Behälters, in der sich das Produkt in der aufrechten Stellung der Vorrichtung befindet, von einer zweiten, der Öffnung benachbarten Zone B trennt, wobei das Trennelement (320) in der Lage ist, zumindest teilweise mindestens einen zweiten Durchlass (330) zwischen der ersten und der zweiten Zone zu begrenzen, wobei der zweite Durchlass so ausgebildet ist, dass ein Fließen des Produkts in einer Richtung zur zweiten Zone als Reaktion auf ein zumindest teilweises Umdrehen der Vorrichtung ermöglicht wird, wobei das Trennelement (320) außerdem den Transport des ganzen oder eines Teils des in der zweiten Zone befindlichen Produkts zum Dosierhohlraum über mindestens einen dritten Durchlass (340) gewährleistet, der vom Rückhalteelement gebildet wird.

2. Vorrichtung nach Anspruch 1, **dadurch gekennzeichnet, dass** das Trennelement (320) aus einer elastisch verformbaren Membran besteht, von der ein Umfangsrand (321) sich bis in die Nähe einer Innenwand (210) des Behälters erstreckt, wobei die Membran einen Abschnitt (322) aufweist, der in der Lage ist, in der aufrechten Stellung der Vorrichtung mit der Innenwand des Behälters in Kontakt zu gelangen und sich unter dem Druck des Produkts als Reaktion auf das teilweise Umdrehen von der Wand zu entfernen.

3. Vorrichtung nach Anspruch 2, **dadurch gekennzeichnet, dass** der Abschnitt (322) der Membran, der in der Lage ist, mit der Innenwand des Behälters in Kontakt zu gelangen, ein ringförmiger Abschnitt in Abstand zum Umfangsrand (321) der Membran ist.

4. Vorrichtung nach einem der Ansprüche 2 oder 3, **dadurch gekennzeichnet, dass** die Membran aus einem elastisch verformbaren Material hergestellt wird, insbesondere einem Material, das aus den thermoplastischen oder vernetzten Elastomermaterialien ausgewählt wird.

5. Vorrichtung nach Anspruch 4, **dadurch gekennzeichnet, dass** das Material aus den Siliconen, den natürlichen oder synthetischen Latexmaterialien, den EPDM, den Polyurethanen, den Mischungen von Polypropylen und SBS, SEBS, oder EPDM, den Polyethylenen sehr niedriger Dichte, den Mischungen auf der Basis von Polyesterglykolen (TPU) oder von Polyetherglykolen (PEBA und COPE), den geschmeidigen Polyvinylchloriden (PVC) ausgewählt wird.

6. Vorrichtung nach einem der Ansprüche 2 bis 5, **dadurch gekennzeichnet, dass** die Membran eine in Richtung der Innenwand des Behälters abnehmende Stärke hat.

7. Vorrichtung nach einem der Ansprüche 2 bis 6, **dadurch gekennzeichnet, dass** die Innenwand des Behälters eine Schulter (220) bildet, auf der der Abschnitt (322) der Membran in Kontakt gelangt, wenn die Vorrichtung sich in der aufrechten Stellung befindet.

8. Vorrichtung nach einem der Ansprüche 1 bis 7, **dadurch gekennzeichnet, dass** das Trennelement (320) in Richtung des Dosierhohlraums geneigt ist.

9. Vorrichtung nach Anspruch 8, **dadurch gekennzeichnet, dass** das Trennelement mit einer Längsachse der Vorrichtung einen Winkel zwischen 60 und 89° bildet.

10. Vorrichtung nach einem der vorhergehenden Ansprüche, **dadurch gekennzeichnet, dass** das Rückhalteelement (30) und das Trennelement (320) durch Formen in einem Stück erhalten werden.

11. Vorrichtung nach einem der vorhergehenden Ansprüche, **dadurch gekennzeichnet, dass** das Rückhalteelement (30) aus einem rohrförmigen Element (350) besteht, dessen Boden (351) geschlossen ist und dem Boden des Dosierhohlraums entspricht, und dessen offenes Ende (352) auf einen Rand des Behälters montiert ist, der die Öffnung (200) begrenzt.

12. Vorrichtung nach Anspruch 11, **dadurch gekennzeichnet, dass** sie außerdem eine Pumpe (40) aufweist, die zur Ausgabe des Produkts (P) vorgesehen ist, wobei die Pumpe fest mit einem Tauchrohr (400) verbunden ist, dessen eines Ende sich im wesentlichen in der Nähe des Bodens (351) des Dosierhohlraums (300) befindet.

13. Vorrichtung nach einem der vorhergehenden Ansprüche, **dadurch gekennzeichnet, dass** das Rückhalteelement (30) sich über einen Teil seiner Höhe im Inneren eines Halses (230) erstreckt, der vom Behälter (30) gebildet wird und von dem ein freier Rand die Öffnung (200) begrenzt.

14. Vorrichtung nach Anspruch 13, **dadurch gekennzeichnet, dass** die Pumpe (40) fest mit einem Mantelring (50) verbunden ist, der fest auf den Hals (230) des Behälters montiert ist, insbesondere durch Einrasten oder Schraubverbindung.

15. Vorrichtung nach einem der Ansprüche 12 bis 14, **dadurch gekennzeichnet, dass** über der Pumpe (40) ein Organ, insbesondere in Form eines Druckknopfs (60), zur Betätigung der Pumpe sitzt.

16. Verwendung einer Vorrichtung nach einem der vorhergehenden Ansprüche für das Verpacken und die Ausgabe eines Kosmetikoder Pflegeprodukts (P), insbesondere für die Haut oder für die Haare.

## Claims

1. Device (10) for the packaging and metered dispensing of a liquid product (P) comprising a container (20) having an opening (200) in which is mounted a retaining element (30) delimiting a metering cavity (300) the content of which is intended to be dispensed when the device is in the head-up position, the said retaining element (30) comprising at least one first passage (310) the position of which delimits the maximum volume of the metering cavity (300), **characterized in that** the said retaining element comprises an element (320) separating a first zone A of the container, in which the product resides when the device is in the head-up position, from a second zone B adjacent to the said opening, the said separating element (320) being capable of delimiting, at least in part, at least one second passage (330) between the first and second zones, the said second passage being configured in such a way as to allow one-way flow of the product towards the second zone in response to at least partial inversion of the device, the said separating element (320) also conducting all or some of the product lying in the second zone towards the metering cavity via at least one third passage (340) formed by the said retaining element.

2. Device according to Claim 1, **characterized in that** the said separating element (320) consists of an elastically deformable diaphragm, a peripheral edge (321) of which extends up close to an interior wall (210) of the container, the said diaphragm comprising a portion (322) capable of coming into contact with the interior wall of the container when the device is in the head-up position, and of moving away from the said wall under the pressure of the product in response to the partial inversion.

3. Device according to Claim 2, **characterized in that** the said portion (322) of the diaphragm capable of coming into contact with the interior wall of the container is an annular portion distant from the peripheral edge (321) of the said diaphragm.

4. Device according to either one of Claims 2 and 3, **characterized in that** the said diaphragm is made of an elastically deformable material, in particular a material chosen from thermoplastic or crosslinked elastomers.

5. Device according to Claim 4, **characterized in that** the material is chosen from silicones, natural or synthetic latices, EPDMs, polyurethanes, blends of polypropylene and SBS, SEBS or EPDM, very-low-density polyethylenes, blends based on polyester glycols (TPU) or on polyether glycols (PEBA and COPE), and flexible polyvinyl chlorides (PVCs).

6. Device according to any one of Claims 2 to 5, **characterized in that** the said diaphragm has a thickness that decreases towards the interior wall of the container.

7. Device according to any one of Claims 2 to 6, **characterized in that** the interior wall of the container forms a shoulder (220) with which the said portion (322) of the diaphragm comes into contact when the device is in the head-up position.

8. Device according to any one of Claims 1 to 7, **characterized in that** the said separating element (320) is inclined towards the metering cavity.

9. Device according to Claim 8, **characterized in that** the said separating element forms an angle of between 60 and 89° with a longitudinal axis of the device.

10. Device according to any one of the preceding claims, **characterized in that** the said retaining element (30) and the said separating element (320) are obtained by moulding as a single piece.

11. Device according to any one of the preceding claims, **characterized in that** the retaining element (30) consists of a tubular element (350) one end (351) of which is closed and corresponds to the bottom of the metering cavity, and an open end (352) of which is mounted on an edge of the container delimiting the said opening (200).

12. Device according to Claim 11, **characterized in that** it further comprises a pump (40) designed to dispense the product (P), the said pump being secured to a dip tube (400) one end of which lies fairly close to the bottom (351) of the metering cavity (300).

13. Device according to any one of the preceding claims, **characterized in that** the said retaining element (30) extends over part of its height inside a neck (230) formed by the container (20) and a free edge of which delimits the said opening (200).

14. Device according to Claim 13, **characterized in that** the pump (40) is secured to a band (50) fixedly mounted on the neck (230) of the container, particularly by snap-fastening or screw-fastening.

15. Device according to any one of Claims 12 to 14, **characterized in that** the said pump (40) is surmounted by a member, particularly in the form of a push-button (60), for actuating the said pump.

16. Use of a device according to any one of the preceding claims for the packaging and dispensing of a cosmetic or care product (P), particularly for the skin or for the hair.
